(19)

**Europäisches Patentamt**
**European Patent Office**
**Office européen des brevets**

(11) **EP 2 377 399 A1**

(12) **EUROPÄISCHE PATENTANMELDUNG**

(43) Veröffentlichungstag:
**19.10.2011 Patentblatt 2011/42**

(51) Int Cl.:
*A01N 53/00* (2006.01) *A01N 25/10* (2006.01)
*A01N 25/22* (2006.01)

(21) Anmeldenummer: **10159994.2**

(22) Anmeldetag: **15.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **Bayer Cropscience AG**
**40789 Monheim (DE)**

(72) Erfinder: **Die Erfindernennung liegt noch nicht vor**

(54) **Insektizidhaltiges Polymermaterial**

(57) Die vorliegende Erfindung betrifft ein insektizidhaltiges Polymermaterial, das wenigstens einen eingebetteten insektiziden Wirkstoff in der Polymermatrix enthält und über eine ausgezeichnete biologische Wirksamkeit verfügt, sowie die aus diesem Polymer hergestellten Produkte und deren Verwendung zum Schutz von Mensch, Tier und Pflanzen gegen Arthropoden, besonders zur Bekämpfung von Insekten.

EP 2 377 399 A1

## Beschreibung

Die vorliegende Erfindung betrifft ein insektizidhaltiges Polymermaterial, das wenigstens einen eingebetteten insektiziden Wirkstoff in der Polymermatrix enthält und über eine ausgezeichnete biologische Wirksamkeit verfügt, sowie die aus diesem Polymer hergestellten Produkte und deren Verwendung zum Schutz von Mensch, Tier und Pflanzen gegen Arthropoden, besonders zur Bekämpfung von Insekten.

Es ist bereits lange bekannt, dass Menschen durch mit Insektizid beschichtete Bettnetze im Schlaf vor Stichen von Arthropoden geschützt werden können. Dies ist besonders wichtig in Ländern, in denen die Arthropoden Krankheiten übertragen (beispielsweise Malaria). Beschichtete Gewebe können auch als Vorhänge vor Fenstern oder Türen benutzt werden, um in die Wohnungen eindringende Arthropoden zu bekämpfen. Auch das Abdecken von Gemüse oder Obst mit beschichteten Geweben zum Schutz vor Arthropoden ist bekannt. Auf diese Weise kann die Kontamination der später gegessenen Pflanzenteile mit Insektiziden minimiert werden.

Aus dem Stand der Technik sind thermoplastische Materialien, die insektizide Wirkstoffe enthalten bekannt.

Die bekannten Materialien für Netze sind im wesentlichen Polyester, vor allem Polyethylenterephtalat und Polyethylen, die allerdings nur eine begrenzte Haltbarkeit aufweisen (vor allem Polyester) und teils bei Berührung als unangenehm spröde empfundene Oberflächen (vor allem Polyethylen) aufweisen. Es wäre daher wünschenswert, Materialien basierend auf anderen, länger haltbaren, mechanisch stärker beanspruchbaren Polymeren zu entwickeln.

In der WO-A2 2008/004711 werden beispielsweise netzartige insektizidhaltige Materialien auf Basis von Polyolefinen wie Polyethylen und/oder Polypropylen offenbart. Als geeignete insektizide Wirkstoffe werden Pyrethroide genannt. Die Herstellung des insektiziden Materials erfolgt durch Schmelzcompoundierung des thermoplastischen Polymers mit dem Insektizid und anschließender Extrusion des Materials.

Die WO-A 2008/032844 beschreibt ebenfalls ein Insekten-abweisendes Material, welches durch Schmelz-Spinnen einer Mischung aus Insektizid und Polyethylen erhalten wird. Als mögliche Insektizide werden Pyrethroide genannt.

Die Benutzung von Polypropylen ist auch bekannt von insektiziden Verdampferplättchen (z.B. WO 97/29634, WO 99/01030, WO 05/044001). Dabei wird ein insektizider Wirkstoff in eine Polypropylenmatrix eingebettet und durch Erhitzen auf über 100 °C in kurzer Zeit freigesetzt, um z.B. einen Raum zu behandeln. Eine Benutzung bei Raumtemperatur und die Nutzung in lang wirkenden Materialien wird dort nicht beschrieben, ebenso wenig die Kombination mit Additiven.

Nachteilig an den aus dem Stand der Technik bekannten Materialien ist jedoch, dass diese die Kriterien der WHOPES-Richtlinien (siehe "Guidelines for laboratory and field testing of long-lasting insecticidal mosquito nets", 2005, http://www.who.int/whopes/guidelines/en/) für insektzidhaltige, lang wirkende Moskitonetze nur bis 20 Waschungen erfüllen, was bedeutet dass solche Materialien beim Waschen stark an aktivem Wirkstoff und somit schon nach ca. 20 Waschzyklen ihre biologische Wirksamkeit verlieren.

Der Verlust von Wirkstoff aus einem mit Wirkstoff ausgerüstetem textilen Flächengebilde, beispielsweise aus einem mit Insektizid ausgerüsteten Netz, lässt sich anhand eines Retentionsindices beschreiben (siehe: "Report of the Eleventh WHOPES Working Group Meeting", WHO, HQ, Geneva, 10-13 December 2007, Annex 1). Dabei wird das polymere Material wiederholt einer in den WHOPES-Richtlinien definierten Behandlung unterzogen.

Entsprechend der WHOPES-Richtlinien nach Phase I müssen die getesteten Textilien nach der Durchführung von 20 Waschungen noch eine bestimmte biologische Wirksamkeit aufweisen. So muss entweder der Knock-down nach 60 Minuten zwischen 95% und 100% oder die Mortalität nach 24 Stunden zwischen 80% und 100% betragen. Der Eintritt des sogenannten Knock-down nach der Anwendung von Insektiziden auf Moskitos gilt als der erste sichtbare Beweis ihrer Wirksamkeit: die Moskitos können sich nicht mehr koordiniert bewegen, nicht mehr fliegen oder laufen und fallen meist auf den Rücken, ohne jedoch schon tot zu sein.

Vor der Behandlung und im Anschluss an die Behandlung wird der Wirkstoffgehalt der Polymer-Wirkstoff-Mischung bestimmt. Der Retentionsindex nach n Behandlungen wird berechnet aus der n-ten Wurzel des Quotienten aus dem Wirkstoffgehalt nach n Behandlung geteilt durch den Wirkstoffgehalt vor der Behandlung.

Für textile Flächengebilde, die für die Vektorkontrolle eingesetzt werden, ist es wünschenswert, dass der Retentionsindex über 95 % liegt, damit auch nach 35 Waschzyklen eine ausreichende biologische Wirksamkeit besteht. Die aus dem Stand der Technik bekannten polymeren insektizidhaltigen Materialien weisen bei der Bestimmung des Retentionsindex zu geringe Werte (zwischen 50 und 90 % nach 5 Waschungen) auf, die eine Wirksamkeit des Materials nur für eine geringere Anzahl an Waschungen und somit einer geringeren Nutzungsdauer gewährleisten.

Ein weiteres Problem ist, dass bei Einsatz des Wirkstoffs Deltamethrin während einer Lagerung des insektizidhaltigen Polymermaterials oder der daraus hergestellten Netze von 2 Wochen bei 54°C eine Umwandlung vom gewünschen S-$\alpha$-Isomer in das unerwünschte R-$\alpha$-Isomer stattfindet.

Der vorliegenden Erfindung lag daher die Aufgabe zugrunde, neue polymere, insektizidhaltige Materialien, insbesondere auf Basis von Polypropylen, zur Verfügung zu stellen, die auch nach einer Lagerung, bevorzugt von 2 Wochen bei 54 °C, eine ausreichende Stabilität des Wirkstoffs aufweisen, so dass eine ausreichende Wirksamkeit des Materials gewährleistet ist. Ebenfalls Aufgabe der vorliegenden Erfindung bestand in der Bereitstellung eines insektizidhaltigen, netzartigen polymeren Flächengebildes, welches die Anforderungen der oben genannten WHOPES-Richtlinien erfüllt. Darüber hinaus sollte die Menge der einzusetzenden Wirkstoffkomponente so gering wie möglich gehalten werden, ohne dass die insektizide Wirkung beeinträchtigt ist. Wünschenswert sind weiterhin eine schnell einsetzende insektizide Wirkung, eine gleichmäßige WirkstoffFreisetzung sowie eine möglichst einfache und kostengünstige Herstellung.

Diese Aufgaben werden durch das erfindungsgemäße polymere insektizidhaltige Material sowie die daraus hergestellten insektizidhaltigen netzartigen, polymeren Flächengebilde gelöst.

Gegenstand der vorliegenden Erfindung ist somit ein insektizidhaltiges Polymermaterial, enthaltend Deltamethrin sowie einen UV-Stabilisator, dadurch gekennzeichnet, dass das Material einen Anteil an R-α-Isomer des Deltamethrins von weniger als 10 Gew.-%, bevorzugt weniger als 8 Gew.-%, besonders bevorzugt weniger als 6 Gew.-% aufweist. Ganz besonders bevorzugt liegt der Anteil des R-α-Isomers zwischen 0 und 5 Gew.-%.

Gegenstand der vorliegenden Erfindung ist ebenfalls ein netzartigen Flächengebilde auf Basis des erfindungsgemäßen insektizidhaltigen Polymermaterials.

Ein solches netzartiges Flächengebilde, enthaltend das erfindungsgemäße Polymermaterial, weist bevorzugt gemäß WHOPES-Richtlinien (Phase I) nach der Durchführung von 25, 30 und 35 Waschungen einen Knock-down nach 60 Minuten zwischen 95% und 100% oder eine Mortalität nach 24 Stunden zwischen 80% und 100% auf.

Darüber hinaus zeigen die netzartigen Flächengebilde, enthaltend das erfindungsgemäße Polymermaterial, nach mindestens 5 Waschungen gemäß des WHOPES-Reports einen Retentionsindex r der Formel (I)

$$\mathrm{r} = \ n\sqrt{\left(t_n / t_0\right)} \hspace{2cm} \text{(I)}$$

in welcher

$t_n$ = Gesamtgehalt Wirkstoff nach n Waschungen (g/kg),

$t_0$ = Gesamtgehalt Wirkstoff nach 0 Waschungen (g/kg) und

n = Anzahl der Waschungen bedeutet,

von mindestens 95%.

Das netzartige Flächengebilde, enthaltend das erfindungsgemäße Polymermaterial, verfügt bevorzugt über eine Regenerationszeit von weniger als 24, bevorzugt von weniger als 8, besonders bevorzugt von weniger als 2 Stunden.

Erfindungsgemäß einzusetzende polymere Materialien sind Polypropylen sowie Polypropylencopolymere. Bevorzugt eingesetzt wird Polypropylen. Aus dem Stand der Technik sind eine Vielzahl von Polypropylenen bekannt. Grundsätzlich lassen sich die Polypropylene nach der Art der Synthese in unterscheiden. Der Hauptteil der Polypropylene wird in Gegenwart von Ziegler-Natta-Katalysatoren im Suspensionsverfahren oder insbesondere im sogenannten Gasphasenverfahren hergestellt (vgl. Kaiser "Kunststoffchemie für Ingenieure", Seite 246 bis 254). Bei der Herstellung im Gasphasenverfahren können auch spezielle Katalysatoren wie Metallocene eingesetzt werden. Die mit Metallocenen als Katalysator hergestellten Polymere sind als Polymermatrix für das erfindungsgemäße insektizidhaltige Polymermaterial besonders geeignet. Die Schmelzpunkte der mit Metallocen-katalysatoren hergestellten Polypropylene liegen zumeist deutlich unter denen der mit konventionellen heterogenen Katalysatorsystemen verfügbaren Polypropylenen. Die statistisch über die Polymerkette verteilten Fehlstellen verhindern das Kristallisationsvermögen der Metallocen-Polypropylene, die in der Regel Schmelzpunkte zwischen 135 und 150 °C aufweisen. Die Verwendung von Metallocenen als Katalysatoren für die Synthese von Polypropylene ermöglicht auch eine bessere stereospezifische Polymerisation, dass heißt die Taktizität der Polypropylene und damit die Eigenschaften lassen sich besser steuern. Die unter Verwendung von Metallocenen katalysierten Polypropylene weisen eine engere Molmassenverteilung auf, d.h. es enthält so gut wie keine in Heptan löslichen Anteile mehr.

Neben der Art des bei der Synthese verwendeten Katalysators lassen sich Polypropylene auch entsprechend der räumlichen Anordnung der Seitengruppen der Kohlenstoffhauptkette unterscheiden. Unterschieden wird in isotaktisches, ataktisches und syndiotaktisches Polypropylen, wobei diese Formen auch in Mischungen auftreten können. Für das erfindungsgemäße insektizidhaltige Polyolefinmaterial wird bevorzugt Polypropylen mit einer überwiegend isotaktischen Struktur eingesetzt.

Eine weitere Unterscheidung von Polypropylenen kann anhand der jeweiligen Anwendungsgebiete erfolgen. So werden die Eigenschaften der Polymere u.a. speziell für die Anforderungen im Spritzguss, in der Extrusion, im Blasformen, beim Pressen, beim Kalandrieren und bei Schmelzespinnen angepasst. Für das erfindungsgemäße insektizidhaltige Polymermaterial werden bevorzugt Polypropylene eingesetzt, die für den Schmelzespinnprozess zur Herstellung von Filamenten, Fasern und Spinnvliesen vorgesehen sind. Besonders bevorzugt werden Polypropylene eingesetzt, die für die Herstellung von Multifilamentfasern mit einem geringen Denier von 50 bis 150 Denier verwendet werden können. Dies sind z.B. Polymere mit dem Markennamen Metocene® und Moplen® (Fa. LyondellBasell, Niederlande), Repol® (Reliance Industries Limited, Indien), Yuplen® (SK corporation Südkorea), Seetec® (LG Chemical, Südkorea) und Achieve® (ExxonMobile Chemical Company, USA) Ganz besonders bevorzugt werden Metallocen-katalysierte Polypropylene eingesetzt, wie z.B. Metocene® HM562S, Schmelztemperatur 145°C (Fa. LyondellBasell, Niederlande) und Achieve® 3845 (ExxonMobile Chemical Company, USA).

Bei der Herstellung der eingesetzten Polymermaterialien können Additive zugegeben werden, die zur Stabilisierung oder Verbesserung der Verarbeitungseigenschaften in das Polymer eingearbeitet werden. Geeignete Additive sind beispielsweise alkylierte Monophenole, Alkylthiomethylphenole, Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl) propionsäure mit ein- oder mehrwertigen Alkoholen, Ester von β -(5-tert-Butyl-4-hydroxy-3-methylphenyl)propionsäure mit ein- oder mehrwertigen Alkoholen, Ester von β -(3,5-Dicyclohexyl-4-hydroxyphenyl)propionsäure mit ein- oder mehrwertigen Alkoholen, Ester von 3,5-Di-tert-butyl-4-hydroxyphenylessigsäure mit ein- oder mehrwertigen Alkoholen, Amide der β - (3,5-Di-tert-butyl-4-hydroxyphenyl)propionsäure, Ascorbinsäure (Vitamin C) und aminische Antioxidantien. Ebenfalls eingesetzt werden können Thiosynergisten, sekundäre Antioxidantien, Phosphite und Phosphonite.

Ebenfalls können bei der Herstellung der eingesetzten Polymermaterialien Metalldesaktivatoren, Peroxidfänger, basische Costabilisatoren, Keimbildner, Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel, Benzofuranone und Indolinone, fluoreszierende Weichmacher, Formtrennmittel, flammhemmende Additive, antistatische Mittel wie Sulfonatsalze, Pigmente sowie organische und anorganische Farbstoffe sowie Verbindungen, die Epoxygruppen oder Anhydridgruppen enthalten, verwendet werden.

Gegenstand der vorliegenden Erfindung ist ein Verfahren zur Herstellung des erfindungsgemäßen insektizidhaltigen Polymermaterials, dadurch gekennzeichnet, dass zunächst das einzusetzende Polymer, bevorzugt Polypropylen, Deltamethrin sowie ein UV-Stabilisator und gegebenenfalls weitere Insektizide oder Additive zusammen oder getrennt bei Temperaturen zwischen 120 und 250°C, bevorzugt 150 und 230°C aufgeschmolzen werden und anschließend die Abkühlung und Erstarrung der polymeren Mischung erfolgt sowie deren Zerteilung in Granulate.

Neben den Insektiziden können gegebenenfalls UV-Absorber und Lichtstabilisatoren in einer Menge von 0,01 bis 15 Gew.-%, bevorzugt 0,03 bis 8 Gew.-%, bezogen auf die Gesamtmasse der Zusammensetzung des insektizidhaltigen Polymermaterials eingesetzt werden. Für die Durchführung des Verfahrens geeignete UV-Absorber und Lichtstabilisatoren sind beispielsweise 2-(2'-Hydroxyphenyl)benzotriazole, 2-Hydroxybenzophenone, Ester von substituierten und unsubstituierten Benzoesäuren, Acrylate, Nickelverbindungen, sterisch gehinderte Amine, Oxamide, 2-(2-Hydroxyphenyl)-1,3,5-triazine sowie Gemische der genannten Verbindungen. Bevorzugt werden keine sterisch ungehinderte Amine als UV-Stabilisatoren eingesetzt, sondern 2-(2'-Hydroxyphenyl)benzotriazole, 2-Hydroxybenzophenone, Ester von substituierten und unsubstituierten Benzoesäuren, Acrylate, Nickelverbindungen, Oxamide, 2-(2-Hydroxyphenyl)-1,3,5-triazine sowie Gemische der genannten Verbindungen. Besonders bevorzugt sind Triazinverbindungen und Butrimezol. Ganz besonders bevorzugt sind Phenol, 2-(2H-benzotriazol-2-yl)-6-dodecyl-4-methyl-, branched and linear (CAS 125304-04-3) und 2-(5-chloro-2H-benzotriazole-2-yl)-6-(1,1-dimethylethyl)-4-methyl-phenol (CAS 3896-11-5).

Das Aufschmelzen des einzusetzenden Polymaterials erfolgt beispielsweise in einem Einschneckenextruder, einem Doppelschneckenextruder, einem Mehrschneckenextruder oder ein Co-Kneter.

Als Einschneckenextruder können beispielsweise Glatt- oder Nutbuchsenextruder oder ein Transfermix eingesetzt werden. Bevorzugt wird ein Nutbuchsenextruder.

Doppelschneckenextruder können entweder gleich- oder gegenläufig ausgeführt werden. Die Doppelschneckenextruder können weiterhin dicht kämmend oder tangierend ausgeführt werden. Bevorzugt wird eine dicht kämmende, gleichläufige Ausführung.

Mehrschneckenextruder verfügen über mindestens drei Wellen, bevorzugt vier bis zwölf. Die Wellen können jeweils paarweise dicht kämmend angeordnet sein, wobei jeweils die Wellenpaare tangential und gegenläufig zueinander angeordnet sind. Weiterhin können die Wellen eines Mehrschneckenextruders alle gleichläufig angeordnet sein, wobei jede Welle in je zwei Nachbarwellen eingreift. Eine Sonderform des Mehrschneckenextruders ist der Planetwalzenextruder, bei dem eine angetriebene Zentralspindel frei umlaufende Planetspindeln antreibt, die wiederum in einem festen Gehäuse umlaufen. Zentralspindel, Planetenspindeln und Gehäuse haben dabei eine Zahnrad-Verzahnung.

Besonders bevorzugt wird für das erfindungsgemäße Verfahren ein dichtkämmender, gleichläufiger Doppelschneckenextruder eingesetzt.

Der Aufbau der Extruderschnecke wird dem jeweiligen Anwendungsfall angepasst.

Bei Raumtemperatur feste Insektizide, UV-Stabilisatoren und weitere Additive werden bevorzugt gemeinsam mit dem Ausgangs-Polymer-Granulat in den Einzug des Extruders dosiert. In einer anderen bevorzugten Ausführung werden bei Raumtemperatur feste Insektizide, UV-Stabilisatoren und andere Additive aufgeschmolzen und flüssig dosiert. Die Extrudergehäuse sind auf 4 bis 250°C temperiert. Das Extrudergehäuse am Einzug des Extruders ist bevorzugt auf 4 bis 50°C gekühlt. Die übrigen Extrudergehäuse sind bevorzugt auf 100 bis 250°C °C und besonders bevorzugt auf 140 bis 250°C temperiert. Im Extruder werden das Polymer und je nach Schmelzpunkt auch das Insektizid sowie der UV-Stabilisator geschmolzen und vermischt. Das Gemisch wird durch eine Lochdüse extrudiert und granuliert. Die Additive können auch weitere anorganische oder organische Füllstoffe wie beispielsweise organische Pigmente, Titandioxid, Ruß oder Talkum umfassen.

Die Verweilzeiten beim Aufschmelzen und Mischen, in denen das Polymer flüssig ist, betragen zwischen 3 und 300 Sekunden, bevorzugt zwischen 5 und 120 Sekunden und besonders bevorzugt zwischen 8 und 30 Sekunden.

Dabei können die Mischung des Insektizids und des UV-Stabilisators sowie weitere Additive mit dem geschmolzenen Polymer in demselben Apparat erfolgen, in dem auch das Aufschmelzen des Polymers erfolgt, oder in einem weiteren Apparat. Für die Mischung eignen sich alle oben genannten Extruder. Eine weitere Möglichkeit ist es, das Insektizid und gegebenenfalls die Additive in einem statischen Mischer mit dem Polymer zu vermischen. Bevorzugt wird die Mischung mit einem statischen Mischer durchgeführt.

Wird das Insektizid oder die Additive in flüssiger Form zugegeben, so wird es in der Regel aufgeschmolzen und in einem Vorlagebehälter zwischengespeichert, von dem es dann in den Mischapparat gefördert wird. Die Förderung kann beispielsweise über eine Pumpe oder über einen erhöhten Vordruck erfolgen. Die Temperatur des Vorlagebehälters wird so gewählt, dass das Insektizid stabil ist und die Viskosität des Insektizids hinreichend klein ist, um gut pumpbar zu sein. Vorteilhaft ist in diesem Fall die Beheizung des Vorlagebehälters, der Pumpe und aller Leitungen. Die Dosierung in den Mischapparat geschieht bevorzugt über ein Nadelventil. Die dosierte Menge an Insektizid wird bevorzugt durch einen geeigneten Massendurchflussmesser, z.B. nach dem Coriolis-Prinzip oder nach dem Hitzdraht-Prinzip, gemessen und über die Pumpe oder ein Ventil auf geringe Abweichungen geregelt.

Bei Raumtemperatur flüssige Insektizide werden zu dem bereits geschmolzenen Polymer in einer Verfahrenszone des Extruders über ein Nadelventil zugegeben. Je nach Viskosität und Schmelzpunkt des Insektizids werden die Insektizide, UV-Stabilisatoren und andere Additive oder ihre Mischung dazu erhitzt.

Im Anschluss an das Mischen erfolgt in einer bevorzugten Ausführung eine Abkühlung und Erstarrung der Polymermaterialien sowie die Zerteilung in Granulate. Dies kann beispielsweise nach dem geläufigen Stranggranulationsverfahren geschehen, bei dem an einer oder mehrere Düsen Endlosstränge ausgeformt werden, die dann an Luft oder Wasser gekühlt, zum so Erstarren gebracht und anschließend in einem Granulator auf die gewünschte Größe zerkleinert werden. Eine weitere Methode ist eine Unterwassergranulation, bei der die Schmelze aus der Düse unter Wasser austritt, dort und von einem umlaufenden Messer geschnitten und anschließend im Wasser gekühlt, danach abgesiebt und getrocknet wird. Eine weitere Methode ist die Wasserringgranulation, in der das Polymer an Luft in schmelzeflüssigem Zustand geschnitten wird und danach durch Zentrifugalkräfte zur Kühlung in einen rotierenden Wassering geschleudert wird. Besonders bevorzugt sind die Methode der Unterwassergranulation und das Stranggranulationsverfahren.

Gegenstand der vorliegenden Erfindung sind ebenfalls Granulate enthaltend das erfindungsgemäße insektizidhaltige Polymermaterial.

In einer Ausführung des erfindungsgemäßen Verfahrens wird nur durch den Mischprozess hergestelltes Polymermaterial einem anschließenden Verarbeitungsprozess zugeführt. Die Menge an Insektizid im einfachen Mischprozess beträgt 0,05 bis 15 Gew.-%, bevorzugt 0,2 bis 10 Gew.-%, besonders bevorzugt 0,4 bis 8 Gew.-%, bezogen auf das Polymermaterial.

In einer weiteren Ausführung wird ein Polymermaterial mit einer erhöhten Konzentration an insektiziden Wirkstoff in Granulatform hergestellt (ein sogenannter Masterbatch) und einem anschließendem Verarbeitungsprozess in einer Mischung mit unbehandeltem Polymer zugeführt. In diesem Fall ist die Konzentration an Insektizid in dem erfindungsgemäßen Masterbatch-Polymermaterial erhöht, bevorzugt auf eine Konzentration zwischen 3 bis 20 Gew.-%, bevorzugt 5 bis 15 Gew.-%.

In einer weiteren Ausführung wird in einem ersten Schritt das erfindungsgemäße Polymermaterial als Masterbatch hergestellt, der im Anschluss durch Aufschmelzen und Mischen mit unbehandeltem Polymer und eventuell weiteren Additiven wiederum zu einem erfindungsgemäßen Polymermaterial weiterverarbeitet wird, das in Form von Granulaten anfällt.

Der anschließende Verarbeitungsprozess kann beispielsweise darin bestehen, dass die so erhaltenen Granulaten des erfindungsgemäßen Polymermaterials in einem Verarbeitungsschritt zu Formteilen verarbeitet wie z.B. Folien, Luftpolsterfolien, Filme, Profile, Blätter, Drähte, Fäden, Bänder, Kabel- und Rohrverkleidungen, Gehäuse für elektrische Geräte (z.B. in Schaltkästen, Flugzeugen, Kühlschränken etc.). Bevorzugt werden in einem Extrusionsprozess Folien hergestellt. Diese Folien können ein- oder mehrlagig hergestellt werden. Dem Fachmann sind Methoden bekannt, mit denen mehrlagige Folien hergestellt werden können. Hierzu zählen beispielsweise die Coextrusion oder das Kaschieren. Bevorzugt wird eine mehrlagige Folie, die aus einer Schicht erfindungsgemäßen Materials besteht sowie aus einer oder mehreren Schichten anderen Materials. Diese anderen Materialien können beispielsweise Polyethylen (HDPE, LDPE, LLDPE) oder Polyethylen-Copolymeren, Polypropylen, Haftmittler wie beispielsweise Ethylen-Vinylacetat-Copolymer, Polyamid, Polycarbonat, Polyvinylchlorid, Polystyrol, Polyester wie beispielsweise Polyethylenterephtalat oder Polybutylenterephtalat, Cellophan, Polylactid, Celluloseacetat, oder Blends dieser Polymere. Diese Polymere können in reiner Form oder als Blends vorliegen und können Additive und weitere anorganische oder organische Füllstoffe wie beispielsweise organische Pigmente, Titandioxid, Ruß oder Talkum enthalten.

Besonders bevorzugt besteht der anschließende Verarbeitungsprozess darin, dass das insektizidhaltige Polymermaterial in einem anschließenden Spinnprozess zu Fasern, Garnen, Filamenten oder Fäden weiterverarbeitet wird.

Bevorzugt wird für das erfindungsgemäße Polymermaterial Deltamethrin als insektizider Wirkstoff eingesetzt. Es ist jedoch auch möglich, dass weitere insektizide Wirkstoffe zugemischt werden. Geeignete zusätzliche Insektizide sind solche aus den Klassen der Organophosphate, Pyrethroide, Neonikotinoide und Carbamate.

Zu den Organophosphaten zählen z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, O-methoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion.

Zu den Pyrethroiden zählen z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901 und Pyrethrin (Pyrethrum). Erfindungsgemäß bevorzugt sind Beta-Cyfluthrin, Bifenthrin, Cyfluthrin, Deltamethrin und Transfluthrin. Erfindungsgemäß besonders bevorzugt sind Beta-Cyfluthrin, Cyfluthrin, Deltamethrin, Permethrin (cis-, trans-) und Transfluthrin.

Zu den Neonikotinoiden zählen z.B. Acetamiprid, Clothianidin, Dinotefuran, Imidacloprid, Nitenpyram, Nithiazine, Thiacloprid und Thiamethoxam. Erfindungsgemäß bevorzugt sind Imidacloprid und Clothianidin.

Zu den Carbamaten zählen z.B. Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb und Triazamate. Erfindungsgemäß bevorzugt sind Bendiocarb und Carbaryl.

Weitere insektizide Wirkstoffe sind z.B. DDT, Indoxacarb, Nicotine, Bensultap, Cartap, Spinosad, Camphechlor, Chlordane, Endosulfan, Gamma-HCH, HCH, Heptachlor, Lindane, Methoxychlor, Acetoprole, Ethiprole, Fipronil, Pyrafluprole, Pyriprole, Vaniliprole, Avermectin, Emamectin, Emamectin-benzoate, Ivermectin, Milbemycin, Diofenolan, Epofenonane, Fenoxycarb, Hydroprene, Kinoprene, Methoprene, Pyriproxifen, Triprene, Chromafenozide, Halofenozide, Methoxyfenozide, Tebufenozide, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron, Buprofezin, Cyromazine, Diafenthiuron, Azocyclotin, Cyhexatin, Fenbutatin-oxide, Chlorfenapyr, Binapacyrl, Dinobuton, Dinocap, DNOC, Fenazaquin, Fenpyroximate, Pyrimidifen, Pyridaben, Tebufenpyrad, Tolfenpyrad, Hydramethylnon, Dicofol, Rotenone, Acequinocyl, Fluacrypyrim, Bacillus thuringiensis-Stämme, Spirodiclofen, Spiromesifen, Spirotetramat, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8), Flonicamid, Amitraz, Propargite, Flubendiamide, Rynoxapyr, Chloranthraniliprol, Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec., Aluminium phosphid, Methylbromide, Sulfurylfluorid, Cryolite, Flonicamid, Pymetrozine, Clofentezine, Etoxazole, Hexythiazox, Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonylbutoxid, Kaliumoleat, Pyridalyl, Sulfluramid, Tetradifon, Tetrasul, Triarathene und Verbutin.

Die genannten Insektizide können einzeln oder in Mischungen eingesetzt werden.

Bevorzugte Insektizide sind Beta-Cyfluthrin, Permethrin (cis-, trans-), Transfluthrin, Bendiocarb, Clothianidin, Imidacloprid, Thiacloprid, Ethiprol, Fipronil, Rynoxapyr, Chlorpyriphos-Methyl, Chlorfenapyr. Besonders bevorzugt sind Beta-Cyfluthrin, Transfluthrin, Bendiocarb, Clothianidin, Ethiprol und Rynoxapyr.

Die Konzentration der insektiziden Wirkstoffe kann in dem Polymermaterial in einem relativ breiten Konzentrationsbereich z.B. 0,05 bis 15 Gew.-%, bevorzugt 0,2 bis 10 Gew.-%, besonders bevorzugt 0,4 bis 8 Gew.-% variiert werden. Die Konzentration sollte dabei je nach Anwendungsgebiet so gewählt werden, dass den Anforderungen bezüglich insektizider Wirksamkeit, Haltbarkeit und Toxizität genügt wird. Eine Anpassung der Eigenschaften des Materials kann auch durch die Mischung von Insektiziden in dem Polymermaterial, durch die Verblendung von erfindungsgemäßem Materialien, die unterschiedliche Insektizide enthalten, geschehen oder durch die Verwendung von erfindungsgemäßen Materialien, die unterschiedliche Insektizide enthalten, die in Kombination miteinander verwendet werden, z.B. als Mosaik-Netze. Auf diese Weise können maßgeschneiderte textile Flächengebilde erhalten werden.

Gegenstand der vorliegenden Erfindung ist ein Verfahren zur Herstellung von Filamenten, Fasern, Fäden und Garnen, dadurch gekennzeichnet, dass das erfindungsgemäße insektizidhaltige Polymermaterial zunächst aufgeschmolzen, zu Spinnfäden geformt und abgekühlt wird, die entstandenen Spinnfäden über eine Streckanlage geführt und verstreckt werden und abschließend die Fixierung und/oder Relaxierung der Filamente, Fasern, Fäden und Garne erfolgt.

Bevorzugt wird bei diesem Verfahren während der Verspinnung ein Spin finish eingesetzt.

Die Herstellung der Fäden oder Filamente erfolgt anschließend nach dem Mischprozess durch Schmelzespinnen wie z.B. beschrieben in der DE-A 41 36 694 (S. 2, Z. 27 - 38, S. 5, Z. 45 - S. 6, Z. 23) oder DE-A 10 2005 054 653 ([0002]). In diesem Verfahren wird das hergestellt insektizide Polymer in einem Einwellenextruder geschmolzen und mit Hilfe einer Zahnradpumpe durch eine Düsenplatte gedrückt. Der Düsenplatte ist ein Filterpaket vorgeschaltet. Die aus der Düsenplatte austretenden Polymerstränge werden mit hoher Geschwindigkeit verstreckt, mit einer Spinnpräparation versehen und aufgewickelt.

Das Schmelzspinnverfahren umfasst die Schritte:

1. Herstellung der Spinnschmelze

2. Schmelzspinnen

3. Kühlen

4. Aufbringen der Spinnpräparation

5. Verstrecken

6. Nachbehandlung

Die Herstellung der Fasern aus dem aufgeschmolzenen, erfindungsgemäßen Polymermaterial erfolgt nach den bekannten Schmelzspinnverfahren. Bevorzugt werden Verfahren zur Herstellung von Monofilamentfasern, Multifilamentfasern, Vliesen, Hohlfasern, Stapelfasern, Mehrkomponentenfasern und in eine Matrix eingebettete Feinstfasern. Besonders bevorzugt ist die Herstellung von Multifilamentfasern.

Im Schritt (1) wird das durch den Mischprozess hergestellte, erfindungsgemäße Polymermaterial bei Temperaturen von mindestens 10°C unterhalb der Zersetzungstemperatur und mindestens 5°C über dem Schmelzpunkt des Polymermaterials aufgeschmolzen und ohne Abkühlung zu dem Spinndüsenpaket gefördert. Bevorzugt wird das Polymermaterial bei einer Temperatur unterhalb von 250°C, besonders bevorzugt unterhalb von 235°C aufgeschmolzen und versponnen.

Die Faserherstellung kann einstufig durchgeführt werden, in dem das Polymermaterial unmittelbar nach dem Mischen in Schmelzeform dem Spinnprozess zugeführt wird. In gleicher Weise ist eine zweistufige Verfahrensweise möglich, bei der das zuvor hergestellte Granulat aus dem zuvor beschriebenen Polymermaterial in einem Förderextruder oder einem beheizbaren Kolben aufgeschmolzen wird und zum Spinnpaket befördert wird.

In einer bevorzugten Ausführung wird das erfindungsgemäße insektizidhaltige Polymermaterial unmittelbar nach dem Mischen in Schmelzeform dem Spinnprozess zugeführt.

Besonders bevorzugt wird das erfindungsgemäße insektizidhaltige Masterbatch-Polymermaterial mit einer erhöhten Insektizidkonzentration bei der Verspinnung mit reinem Polymermaterial vermischt. Diese Vermischung kann auf unterschiedliche Weise erfolgen. In einer Ausführung werden das insektizidhaltige Polymermaterial und das zusätzliche Polymermaterial über zwei separate Dosieraggregate dem Einwellenextruder, in dem die Materialien aufgeschmolzen werden, zugeführt. In einer weiteren Ausführung werden die beiden Polymermaterialien vor der Zugabe in den Einwellenextruder vermischt und dann als Vormischung dem Extruder zugeführt. In einer weiteren Ausführung werden das insektizidhaltige Polymer und das unbeladenen Polymermaterial in zwei separaten Extrudern aufgeschmolzen und diese beiden Schmelzeströme werden anschließend miteinander vermischt.

Das Spinndüsenpaket besteht aus einem bekannten Aufbau. Die Spinndüsenplatte kann eine bis mehrere tausend Düsenbohrungen besitzen mit zur Faserherstellung üblichen Lochdurchmessern. Nach dem Spinndüsenpaket passieren die Spinnfäden eine Kühlstrecke, werden mit einer Spinnpräparation versehen und werden aufgespult oder in Kannen abgelegt. Als Kühlmedium werden Flüssigkeiten oder Gase verwendet. Als Flüssigkeit wird Wasser verwendet. Als trockene Kühlstrecken werden Blasschächte eingesetzt, in denen die Spinnfäden mit kalter Luft, Stickstoff oder Kohlendioxid als Kühlgas abgekühlt werden.

Bei der Verspinnung wird eine Spinnpräparation auf die Fasern aufgetragen. Durch Auftragen der Spinnpräparation werden die Oberflächeneigenschaften der Fasern verändert. Die Spinnpräparation dient unter anderem zur Verringerung der Reibung zwischen Metall und Faden und zwischen den Fäden untereinander, sowie zur Reduzierung der antistatischen Aufladung der Fasern. Das Auftragen einer Spinnpräparation ist für die Durchführung des Schmelzespinnprozesses notwendig. Ohne ein angepasstes Spinnfinish ist das Auf- und Abspulen und Weiterverarbeiten von Filamentgarnen nicht möglich. Die Menge der aufgetragenen nichtwässrigen Bestandteile der Spinnpräparation beträgt 0,1 bis 2,0 Gew.-%, bevorzugt 0,5 bis 1,5% der trockenen Faser.

Die Auftragung der Spinnfinishpräparation kann im Ausgang oder Eingang der Faserstraße, der Spul-/Abzugsmaschine, der Umspulmaschiene und/oder des Blasschachts erfolgen.

Die Spinnpräparation bzw. die Mischung aus Spinnpräparation und Wasser kann auf unterschiedliche Weise auf die Faser aufgetragen werden. Grundsätzlich ist die Auftragung durch Sprühen, Tauschen, Walzen, Stäbe und Stifte möglich.

Die Spinnpräparation kann in einer oder in zwei Stufen zudosiert werden.

Die aufgespulten oder abgelegten Spinnfäden können nun über eine Streckanlage geführt, verstreckt und als glattes Filament aufgespult oder gegebenenfalls gekräuselt, fixiert oder zu Stapelfasern geschnitten werden.

Bevorzugt werden der Spinn- und der Streckprozess in einer Anlage ohne zwischenzeitiges Aufspulen der unverstreckten Filamente durchgeführt. Geeignete Streckanlagen sind für glatte Multifilamente Streckzwirn- oder Streckspulmaschinen oder Spinnstreckspulanlagen, für Monofilamente kompakte Monofil-Spinnstreckanalgen, für Stapelfasern Streckstraßen und Kompaktspinnstreckanlagen. Die Streckanlagen können ausgerüstet sein mit beheizbaren oder z. T. nicht beheizbaren Galetten oder Streckwerken, sowie Verlegerollen, des weiteren mit Dampf-, Heißluft- und Infrarotkanälen, Aviviervorrichtungen, Kräuseleinheiten, Trocknern, Schneidanlagen u.a. Einheiten. Im Anschluss an den Streckprozess können alle bekannten Ausrüstungmaßnahmen durchgeführt werden, wie z.B. das Aufbringen einer Avivage.

Das Fixieren bzw. Relaxieren der Filamente oder Fasern wird zumeist auf diesen Anlagen nach dem Streckvorgang durchgeführt.

Die schnellgesponnenen Multifilamente können auf hierfür bekannten Maschinen strecktexturiert, die verstreckten Multifilamente texturiert werden.

Ebenfalls Gegenstand der vorliegenden Erfindung sind Fäden, Garne, Fasern oder Filamente enthaltend die erfindungsgemäßen insektizidhaltigen Polymermaterialien.

Die so hergestellten Fäden, Garne, Fasern oder Filamente, enthaltend das erfindungsgemäße Polymermaterial, können anschließend in beliebige Produkte weiterverarbeitet werden wie beispielsweise textile Flächengebilde. Bevorzugt sind z.B. Gewebe, Geflechte, Maschenware, Filze oder Vliesstoffe. Besonders bevorzugt sind netzartige Flächengebilde wie z.B. Bettnetze.

Die Herstellung von Geweben und Geflechten erfolgt durch zwei rechtwinklig miteinander verkreuzte Fadensysteme (Kette und Schuss). Die Maschenware kann aus einem Fasen herstellt werden (Einfaden-Maschenware) oder aus mehreren Fäden (Kettfaden-Maschenware) nach der Kettfadentechnik aufgebaut sein. Diese Flächengebilde werden auf Wirk- oder Strickmaschinen hergestellt. Ferner können aus kurzen Fäden oder Fädenstücke Filze oder Vliesstoffe hergestellt werden.

Für die Herstellung von netzartigen Flächengebilde mittels Wirk- und Strickverfahren ist die Herstellung eines sogenannten Kettbaumes erforderlich. Dabei werden die Polymerfäden in gleicher Länge parallel auf eine Spule, den sogenannten Kettbaum aufgespult.

Um die Polymerfäden während der Verarbeitung zu einem textilen Flächengebilde gleitfähiger und strapazierfähiger zu machen, werden die Fäden häufig geschlichtet, d.h. es wird ein Schutzfilm aus Stärke oder synthetischen Schlichten überzogen. Zum Schlichten kann ein Spulöl eingesetzt werden, das während der Kettbaumherstellung aufgetragen wird, um die Spuleigenschaften während der Kettbaumherstellung zu verbessern und die Faden-Faden-Reibung sowie die Reibung zwischen Metall und Faden zu reduzieren. Die Reduzierung der Reibung ist sowohl für die Kettbaumherstellung als auch für den anschließenden Wirkprozess wichtig.

Vor der weiteren Behandlung (z.B. Bleichen und Färben) werden textile Flächengebilde aus Chemiefasern im Allgemeinen gewaschen, da die Chemiefasern geringe Mengen von Additiven an der Faseroberfläche enthalten. Dabei handelt es sich insbesondere um die oben beschriebenen Spinnpräparationen, aber auch andere Additive wie evt. aufgebrachte Schlichten werden dabei entfernt. Für diesen Waschprozess stehen verschiedene Verfahren zur Verfügung. Bei einigen Verfahren wird die Waschflotte bewegt, bei anderen Fasern wird das textile Flächengebilde durch die ruhende Waschflotte bewegt. Mögliche Verfahren sind Impulswäscher, Düsenwäscher, Waschen auf Siebtrommeln, Foulards sowie Vakuumverfahren. Im technischen Maßstab sind kontinuierliche Verfahren bevorzugt.

Für Polypropylen- und Polyethylenfasern wird dieser Vorgang nach den Verfahren des Standes der Technik nicht durchgeführt, da textile Flächengebilde aus diesen Polymeren nicht mit einem Färbebad gefärbt werden können. Dies gilt insbesondere für die Herstellung von Moskitonetzen, da in diesem Fall keine weitere Veredlung des textilen Flächengebildes abgesehen von der thermischen Fixierung erfolgt.

Überraschend wurde jedoch gefunden, dass das Waschen des erfindungsgemäßen netzartigen Flächengebildes mit Wasser und einem Detergenz vor dem thermischen Fixiervorgang sich positiv auf den Verlust von Insektizid während des Waschens nach den WHOPES-Richtlinien auswirkt. Zwecks dieses Waschvorgangs sind alle oben beschriebenen Wasch-Verfahren anwendbar.

Das so hergestellte Flächengebilde weist häufig sehr elastische Eigenschaften auf und ist nicht formstabil. Es ist in dieser Form insbesondere für die Herstellung von Moskitonetzen nicht geeignet, da für diese Anwendung spezielle Anforderungen an den Schrumpft gestellt werden, der nach DIN EN ISO 5077 bestimmt wird. Aus diesem Grund ist die Durchführung einer thermischen Fixierung bevorzugt. Die thermische Fixierung kann mit Heißwasser, Sattdampf oder Heißluft durchgeführt werden oder in trockener Atmosphäre. Bevorzugt ist die Durchführung der Thermofixierung bei normaler Atmosphäre ohne Zusatz von Wasser oder Dampf. Für die Durchführung der thermischen Fixierung wird bevorzugt ein kontinuierliches Verfahren eingesetzt, in dem das textile Flächengebilde auf einem Spannrahmen fixiert wird und durch einen Ofen geführt wird. Dieser Ofen ist bevorzugt in mehrere Heizzonen unterteilt, die einzeln temperiert werden können. Während der thermischen Behandlung kann das textile Flächengebilde gleichzeitig in unterschiedlichem Maße durch Strecken mechanisch belastet werden. Dies wird durchgeführt, in dem die beiden Seiten des Spannrahmens im Fixierofen auseinanderfahren, bis die gewünschte Breite des Gewirks erreicht wird.

Die Temperatur des thermischen Fixiervorganges für das netzartige Flächengebilde, enthaltend das erfindungsgemäße Polymermaterial, wird 20°C, bevorzugt 10°C unterhalb der Schmelztemperatur des Polymers gewählt. Überraschend wurde gefunden, dass durch das thermische Fixieren wenige Grad unterhalb der Schmelztemperatur des Polymers es zu einer Verringerung des Verlustes des Insektizids während einer Waschung in Seifenlauge führt.

Neben der überraschend gefundenen Wirkung der Fixiertemperatur auf die Freisetzung des Insektizids aus dem erfindungsgemäßen Materials während der Waschung in Seifenlauge, führt die Fixiertemperatur zur Veränderung der Kristallstruktur im Polymer, was anhand von DSC-Messungen bestimmt werden kann. Die erfindungsgemäßen Materialien weisen nur einen geringen Anteil an Kristallstrukturen auf, die oberhalb der bevorzugten Fixiertemperatur während der DSC-Messung unter üblichen Bedingungen aufschmelzen.

Neben der Temperatur kann auch die Zeitdauer des Fixiervorganges kann durch die Geschwindigkeit, mit der das Gewirk durch den Fixierofen geführt wird, variiert werden. Zur Herstellung des erfindungsgemäßen netzartigen Flächengebildes muss die Zeitdauer so gewählt werden, dass während einer üblichen DSC-Messung die Menge der Kristallstrukturen im erfindungsgemäßen Material, die oberhalb von 140°C aufschmilzt, mehr als 62 J/g und bevorzugt mehr als 65 J/g beträgt..

Die erfindungsgemäßen insektizidhaltigen Polymermaterialien oder deren Folgeprodukte können mit gutem Erfolg zur Abtötung von schädlichen oder lästigen Gliederfüßern, insbesondere Spinnentiere und Insekten, verwendet werden. Die netzartigen Flächengebilde, enthaltend das erfindungsgemäße insektizidhaltige Material, werden bevorzugt zur Herstellung von Bettnetzen zum Schutz vor Stechmücken verwendet.

Zu den Spinnentieren gehören Milben (z.B. Sarcoptes scabiei, Dermatophagoides pteronys-sinus, Dermatophagoides farinae, Dermanyssus gallinae, Acarus siro) und Zecken (z.B. Ixodes ricinus, Ixodes scapularis, Argas reflexus, Ornithodorus moubata, Boophilius microplus, Amblyomma hebraeum, Rhipicephalus sanguineus).

Zu den saugenden Insekten gehören im wesentlichen die Stechmücken (z.B. Aedes aegypti, Aedes albopictus, Aedes vexans, Culex quinquefasciatus, Culex tarsalis, Anopheles gambiae, Anopheles albimanus, Anopheles stephensi, Mansonia titillans), Schmetterlingsmücken (z.B. Phlebotomus papatasii), Gnitzen (z.B. Culicoides furens), Kriebelmükken (z.B. Simulium damnosum), Stechfliegen (z.B. Sto-moxys calcitrans), Tsetse-Fliegen (z.B. Glossina morsitans morsitans), Bremsen (z.B. Taba-nus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloro-pyga, Hypoderma bovis, Hypoderma lineatum, Dermatobia hominis, Oestrus ovis, Gaste-rophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephalides canis, Ctenocephali-des felis) und Sandflöhe (Tunga penetrans).

Zu den beißenden Insekten gehören im wesentlichen Schaben (z.B. Blattella germanica, Periplaneta americana, Blatta orientalis, Supella longipalpa), Käfer (z.B. Sitiophilus granarius, Tenebrio molitor, Dermestes lardarius, Stegobium paniceum, Anobium punctatum, Hylotrupes bajulus), Termiten (z.B. Reticulitermes lucifugus), Ameisen (z.B. Lasius niger, Monomorium pharaonis), Wespen (z.B. Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Bevorzugt werden die erfindungsgemäßen Materialien gegen Insekten, vor allem der Ordnung Diptera und besonders bevorzugt gegen die Unterordnung Nematocera eingesetzt.

Ebenfalls Gegenstand der vorliegenden Erfindung ist die Verwendung des erfindungsgemäßen insektizidhaltigen Materials zur Herstellung von Bettnetzen.

**Beispiele:**

**Testmethoden Biologie**

**Testinsekten**

Weibliche Malariamücken (*Anopheles gambiae,* empfindlicher Stamm Kisumu), nur mit Zuckerwasser gefüttert.

**Drei-Minuten-Exposition (Kegel-Test)**

Die Tests wurden unter Benutzung von WHO Standard-Kegeln mit einer Expositionszeit von 3 Minuten an Teilproben durchgeführt. Die Netzstücke hatten eine Größe von 30 x 30 cm. Es wurden jeweils fünf Mücken gleichzeitig unter einen Kegel gegeben und vier Kegel auf einer Teilprobe verwendet. Dieselbe Probe wurde anschließend noch einmal mit vier und einmal mit zwei Kegeln getestet, d.h. 2,5 Wiederholungen mit insgesamt 50 Mücken.
Nach der Exposition wurden die Insekten in Plastikbecher zu je 10 Tieren überführt und nach 60 Minuten die Knock-down-Wirkung bestimmt. Diese bestimmt die ersten sichtbaren Anzeichen des Wirkungseintritts und ist dadurch gekennzeichnet dass die Tiere die Koordination ihrer Bewegungen verlieren und nicht mehr fliegen oder laufen können. Danach wurde ebenfalls Zuckerwasser gegeben und nach 24 Stunden die Mortalität bestimmt. Nach den Tests wurden Mittelwerte berechnet.

**Waschprozess nach WHOPES-Richtlinien**

500 ml deionisiertes Wasser mit 0,2% (w/v) Waschmittel (Le Chat, Henkel, Frankreich) wurden bei 30°C in eine 1-Liter-Glasflasche gegeben. Ein 30 x 30 cm großes Stück Netz bzw. drei 15 x 12 cm große Netzstücke wurden in die Flasche gegeben, welche in einem Wasserbad bei 30°C auf einem Horizontal-Schüttler (155 Bewegungen pro Minute) stand. Danach wurde das Wasser aus der Flasche gegossen und die Probe zweimal mit 500 ml Wasser jeweils 10 Minuten ebenfalls unter Schütteln gespült.
Die Netzproben wurden auf einer Leine hängend zwei Stunden und danach noch wenigstens 24 Stunden liegend auf Aluminiumfolie bei 27°C und 70-80 % relativer Luftfeuchte getrocknet, bevor erneut gewaschen wurde oder eine Evaluierung der biologischen Wirksamkeit durchgeführt.

**Analyse von Deltamethin in Polypropylene**

**Teil A - Probenvorbereitung:**

Ca. 1 g Material einer repräsentativen Probe (Garn, Gewebe oder Granulat) wird in einen 250 ml Kolben gegeben; dann werden ungefähr 30 ml Xylol (PA Qualität) zugegeben. Das Probenmaterial wird nun unter Rückfluß (wassergekühlte Kolonne, 20 cm) und Rühren (125 Umdrehungen pro Minute, Magnet-Rührer und Rührstäbchen) bei exakt 3 Minuten im Ölbad mit 190°C gelöst. Nach entfernen des Ölbades werden circa 10 ml Isopropanol (PA Qualität) zugegeben und der Kolben zum Abkühlen für etwa 5 Minuten bei Raumtemperatur belassen um das Polymer zu fällen. Danach wird der Extrakt mit 30 ml Acetonitril aufgefüllt.
Die Probe wird anschließend über eine Nutsche (Analysenfilter, 5 cm Durchmesser) abgesaugt und das Filtrat danach über eine Faltenfilter (MN 715, 240mm) gegeben. Beide Filtrationen werden erfolgen unter Waschung mit jeweils 10 - 20 ml Lösemittel (Acetonitril).
Abschließend wird das Filtrat quantitativ in eine 100 ml Meßkolben überführt und bis zum Eichstrich mit Acetonitril auf gefüllt.

**Teil B - Quantitative Bestimmung durch HPLC mit externem Standard:**

Die Quantifizierung von Deltamethrin in Proben aus Polypropylen-Extrakten wird mittels HPLC auf einem Agilent 1100 Gerät mit binärem Pumpensystem durchgeführt. Zielmoleküle der Analyse sind Deltamethrin und das R-Alpha-Isomer. Als Referenzmaterialien werden zertifizierte Analysenstandards verwenden. Die Trennung erfolg unter Normalphasenbe-dingungen auf einer Merck Lichrosorb SI 60 Säule (5$\mu$ Partikel, Abmessungen 250 x 4 mm) bei 40°C Säulentemperatur.
Das Injektionsvolumen beträgt 10 $\mu$l (Probenvorbereitung siehe Teil A oben). Die Trennung erfolgt mittels einem Lösemittelgemisch von N-Heptan und Methyltertiärbutyläther (950+50, HPLC Qualität) bei einer Flußrate von 1 ml pro Minute. Die Laufzeit beträgt unter diesen Bedingungen 10 Minuten.

Für die UV Detektion bei einer Wellenlänge von 230 nm wird ein Diodenarray-Detektor verwendet. Die typische Retentionszeit beträgt unter den beschriebenen Bedingungen etwa 6,3 Minuten für das R-$\alpha$-Isomer und 7,0 Minuten für das Deltamethrin.

### Herstellung der Proben:

Die Herstellung der erfindungsgemäßen Polymermaterialien erfolgte mit einem gleichsinnig drehenden, dichtkämmenden Doppelschneckenextruder mit einem Schneckendurchmesser von 34 mm und einer Gehäuselänge von 1200 mm. Die Extrudertemperatur betrug in allen Schritten 200°C und die Extruderdrehzahl betrug 160 U/min. In dem Extruder wurde ein sogenannter Masterbatch mit einer hohen Konzentration des Deltamethrins hergestellt. Dazu wurden in dem Extruder 10 Gew.-% Deltamethrin technisch (BCS AG, Monheim DE), 2 Gew.-% Tinuvin® 326 FL (BASF (Ciba), Ludwigshafen, Deutschland) und 88 Gew.-% Polypropylen (Metocen® HM562S, LyondellBasell, Rotterdam, Niederlande) gemischt (TK10). Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung. Das Granulat enthielt ca. 9,2 % Deltamethrin.

In einem zweiten Schritt wurden Fäden hergestellt wobei ca. 1,1 Gew.-% des wie oben beschrieben hergestellten deltamethrinhaltigen Granulats mit 98,9 Gew.-% reinem Polypropylen (Metocen® HM562S oder Yuplen® H 893S (SK corporation, Seoul, Korea) verdünnt wurden. Dazu wurden die Granulate jeweils in die Einzugszone eines Einschneckenextruders dosiert und aufgeschmolzen und die beiden Schmelzeströme anschließend vereinigt und gemischt. Bei der Verspinnung wurde ca. 1 Gew.-% der Spinnpräparation Stantex® 6051 (Pulcra Chemicals GmbH, Düsseldorf, Deutschland) auf die Fasern aufgetragen. Die Fasern wurden anschließend verstreckt und auf Spulen aufgewickelt. Die Dicke der Fasern betrug 210 dtex und die Fasern bestanden aus 25 Filamenten. Im zweiten Schritt erfolgte die Verstreckung der Fasern bis auf eine Dicke von 110 dtex. Für das Verstrecken der Fasern wurden drei Galettenpaare verwendet. Die Temperatur der Galettenpaare betrug 60, 80 und 120°C. Die durchschnittliche Festigkeit der Fasern betrug 4,3 cN/dtex und die Restdehnung der Fasern betrug 51%.

Die beiden für die Verdünnung verwendeten Polypropylene unterscheiden sich unter anderem in ihrer Herstellung. Das Polyproyplen Metocen® HM 562S wurde unter Verwendung eine Metallocen-Katalysators hergestellt, während das PolypropylenYuplen® H 893S mit einem Ziegler-Natta Katalysator hergestellt wurde.

Aus den ersponnenen Polypropylenfasern wurden anschließend Gewirke hergestellt. Dazu wurde zunächst ein Kettbaum hergestellt, in dem die Polypropylenfasern von den Einzelspulen parallel auf eine Spule, den sogenannten Kettbaum, aufgespult wurden. Diese Kettbäume wurden anschließend in einem Kettenwirkautomaten für die Gewirkherstellung verwendet.

Ein Teil des unbehandelten Gewirks wurde anschließend einem Thermofixierprozess im Labormaßstab zugeführt. Dazu wurde ein Mathis Labor Dämpfer, Typ -Nr. DHe 61599 eingesetzt. Vor der Thermofixierung wurde ein Teil der Gewirkstücke einmal gewaschen. Für 1 bis 2 Netzstücke von ca. 35 cm x 35 cm Größe werden 300 ml Leitungswasser von 30°C mit 0,1% Tween® 20 (Sigma-Aldrich Chemie GmbH, München, Deutschland) versetzt und homogenisiert. Mit Hilfe eines Glasstabes werden die Netzstücke darin 5 min gerührt, anschließend ausgewrungen und 2 x 1 min mit 300 ml entmin Wasser von ca. 15 - 20°C (ebenfalls unter Rühren) nachgespült. Dann werden die Netzstücke mindestens 1 h zur Trocknung aufgehängt. Andere Gewirkstücke wurden dem Fixierprozess ungewaschen zugeführt. Der Fixierprozess wurde bei verschiedenen Temperaturen durchgeführt.

Ferner wurde die Atmosphäre bei der die Thermofixierung durchgeführt wurde, variiert. Die Thermofixierung wurde in einer trockenen Atmosphäre durchgeführt oder in einer mit Wasserdampf gesättigten Atmosphäre.

Die Proben wurden bezüglich ihrer biologischen Wirksamkeit und ihres Verlustes von Deltamethrin evaluiert. Anschließend erfolgte die mehrmalige Durchführung der Waschprozedur nach dem WHOPES Protokoll und weitere Evaluierungen der biologischen Wirksamkeit und des Verlustes von Deltamethrin.

### Ergebnisse

#### 1. Beispiel: Einfluss Abwaschen Spinn finish auf Biologie

In diesem Beispiel wurde für die Herstellung der Fasern ausschließlich das Polypropylen Metocen® HM 562S eingesetzt. D.h. die Verdünnung des Masterbatches während der Verspinnung erfolgte mit diesem Polymer. Der Schmelzpunkt des Polymers Metocen® HM 562S beträgt laut Datenblatt 145 °C. Anschließend wurde aus den Fäden entsprechend dem oben beschriebenen Prozess ein Gewirk hergestellt.

Die Gewirkstücke wurden in einer dampfhaltigen Atmosphäre bei unterschiedlichen Temperaturen für 90 Sekunden thermofixiert. Eine Hälfte der Gewirkstücke wurde vor der Thermofixierung entsprechend der oben beschriebenen Prozedur gewaschen, um die auf den Fasern vorhandene Spinnpräparation zu entfernen, die andere Hälfte der Gewirkstücke wurde vor der Thermofixierung nicht weiter behandelt. Auf den Fäden dieser Gewirkstücke war die Spinnpräparation noch vorhanden.

Die Gewirkstücke wurden zunächst entsprechend der oben beschriebenen Prozedur bezüglich ihrer biologischen Wirksamkeit getestet. Anschließend wurden die Gewirkstücke entsprechend dem oben beschriebenen Waschprozess nach WHOPES-Richtlinien 5, 10, 15, 20, 25 und 30 Mal hintereinander gewaschen und jeweils danach bezüglich ihrer biologischen Wirksamkeit evaluiert.

**Tabelle 1:** Einfluss des Spin finish auf Biologie

| Temperatur bei der Ther-mofixierung [°C] | Anzahl der Waschungen nach WHOPES Protokoll [-] | Knock down nach 60 min | | Mortalität nach 24 h | |
| --- | --- | --- | --- | --- | --- |
| | | Vor der Thermo-fixierung gewaschene Proben | Vor der Thermo-fixierung ungewaschene Proben | Vor der Thermofixierung gewaschene Proben | Vor der Thermofixierung ungewaschene Proben |
| 110 | 0 | 100% | 100% | 100% | 100% |
| 120 | 0 | 100% | 100% | 100% | 100% |
| 130 | 0 | 100% | 100% | 100% | 100% |
| 140 | 0 | 100% | 100% | 100% | 100% |
| 110 | 5 | 100% | 100% | 100% | 100% |
| 120 | 5 | 100% | 100% | 100% | 100% |
| 130 | 5 | 100% | 100% | 100% | 100% |
| 140 | 5 | 100% | 100% | 100% | 100% |
| 110 | 10 | 100% | 95% | 95% | 95% |
| 120 | 10 | 97% | 88% | 97% | 88% |
| 130 | 10 | 98% | 100% | 100% | 100% |
| 140 | 10 | 100% | 98% | 100% | 98% |
| 110 | 15 | 98% | 85% | 94% | 52% |
| 120 | 15 | 96% | 82% | 96% | 53% |
| 130 | 15 | 100% | 89% | 95% | 89% |
| 140 | 15 | 100% | 91% | 100% | 100% |
| 110 | 20 | 100% | 95% | 97% | 84% |
| 120 | 20 | 98% | 95% | 100% | 76% |
| 130 | 20 | 100% | 63% | 100% | 37% |
| 140 | 20 | 100% | 90% | 100% | 95% |
| 110 | 25 | 100% | 88% | 100% | 80% |
| 120 | 25 | 95% | 80% | 95% | 59% |
| 130 | 25 | 98% | 80% | 93% | 78% |
| 140 | 25 | 100% | 88% | 98% | 93% |
| 110 | 30 | 95% | 85% | 100% | 89% |
| 120 | 30 | 96% | 70% | 96% | 54% |
| 130 | 30 | 100% | 83% | 100% | 90% |
| 140 | 30 | 100% | 93% | 95% | 98% |

Die Ergebnisse zeigen, dass das Abwaschen der Spinnpräparation vor der Thermofixierung eine wesentlich bessere biologische Wirkung nach 15 Waschungen nach WHOPES-Richtlinien erreicht wird.

Für die vor der Thermofixierung gewaschenen Proben zeigt sich ein klarer Zusammenhang zwischen der Temperatur, die bei der Thermofixierung gewählt wurde und der biologischen Wirksamkeit. Je näher die Temperatur am Schmelzpunkt des Polymers liegt, desto höher ist die biologische Wirkung.

Die Temperatur bei der Thermofixierung muss daher höchstens 20°C und bevorzugt höchstens 10°C unterhalb der Schmelztemperatur des Polymers liegen, damit eine maximale biologische Wirksamkeit erreicht wird.

### 2. Beispiel: Einfluss Abwaschen Spinn finish auf Verlust Deltamethrin

Die in Beispiel 1 bezüglich ihrer biologischen Wirksamkeit untersuchten Proben wurden auch nach oben beschriebener Prozedur bezüglich des Deltamethringehaltes untersucht.

**Tabelle 2: Verlust Deltamethrin**

| Temperatur bei der Thermofixierung [°C] | Anzahl der Waschungen nach WHOPES Protokoll [-] | Deltamethringehalt | | Retentionsindex | |
|---|---|---|---|---|---|
| | | Vor der Thermofixierung gewaschene Proben | Vor der Thermofixierung ungewaschene Proben | Vor der Thermofixierung gewaschene Proben | Vor der Thermofixierung ungewaschene Proben |
| 110 | 0 | 100% | 100% | | |
| 120 | 0 | 100% | 100% | | |
| 130 | 0 | 100% | 100% | | |
| 140 | 0 | 100% | 100% | | |
| 110 | 5 | 64% | 32% | 91,4% | 79,4% |
| 120 | 5 | 69% | 38% | 92,8% | 82,3% |
| 130 | 5 | 79% | 51% | 95,3% | 87,4% |
| 140 | 5 | 82% | 34% | 96,0% | 80,4% |
| 110 | 10 | 53% | 26% | 93,8% | 87,2% |
| 120 | 10 | 57% | 30% | 94,5% | 88,7% |
| 130 | 10 | 63% | 39% | 95,5% | 91,1% |
| 140 | 10 | 84% | 54% | 98,2% | 94,0% |
| 110 | 15 | 52% | 22% | 95,8% | 90,4% |
| 120 | 15 | 59% | 30% | 96,5% | 92,3% |
| 130 | 15 | 61% | 34% | 96,8% | 93,0% |
| 140 | 15 | 79% | 50% | 98,5% | 95,4% |
| 110 | 30 | 43% | 23% | 97,2% | 95,2% |
| 120 | 30 | 49% | 23% | 97,6% | 95,2% |
| 130 | 30 | 53% | 28% | 97,9% | 95,8% |
| 140 | 30 | 63% | 39% | 98,5% | 96,9% |

Der Gehalt an Deltamethrin nach der Thermofixierung wurde zu 100% gesetzt und die Gewirkstücke wurden anschließend nach 5, 10, 15 und 30 Waschungen entsprechend des WHO-Protokolls bezüglich ihres Deltamethringehalts untersucht.

Die Ergebnisse zeigen, dass die Temperatur bei der Thermofixierung höchstens 20°C und bevorzugt höchstens 10°C unterhalb der Schmelztemperatur des Polymers liegen muss, damit der Verlust an Deltamethrin aus dem erfindungsgemäßen Gewirk möglichst gering ist.

**3. Beispiel: Einfluss Abwaschen Spinn finish auf Wirkstoffstabilität während Lagerung**

Die in Beispiel 1 untersuchten Proben wurden direkt nach der Herstellung bezüglich der Wirkstoffstabilität nach einer Lagerung von 2 Wochen bei 54°C untersucht. Mit diesen Lagerbedingungen wird eine Mindesthaltbarkeit von 2 Jahren gewährleistet. Die Proben wurden 2 Wochen bei 54°C gelagert und anschließend entsprechend der oben beschriebenen Methode bezüglich ihres Gehaltes an R-$\alpha$-Isomer des Deltamethrins untersucht:

**Tabelle 3:** Anteil R-$\alpha$-Isomer nach Lagerung

| Temperatur bei der Thermofixierung [°C] | R-$\alpha$-Isomer des DLT | |
|---|---|---|
| | Vor der Thermofixierung ungewaschene Proben | Vor der Thermofixierung gewaschene Proben |
| 110 | 50,74% | 5,07% |
| 120 | 43,58% | 5,68% |
| 130 | 45,74% | 4,66% |
| 140 | 51,11% | 5,42% |

Die Ergebnisse zeigen, dass durch das Abwaschen des Spin finish die Bildung von R-$\alpha$-Isomer während der Lagerung auf unter 10% reduziert werden kann.

**4. Beispiel: Einfluss der Atmosphäre**

Die folgende Tabelle zeigt den Einfluss der Atmosphäre bei der Thermofixierung auf den Verlust an Deltamethrin während der Durchführung von Waschungen nach den WHOPES-Richtlinien. Die Gewirkstücke wurden alle bei 140°C für 90 Sekunden thermofixiert. Dabei wurde die Atmosphäre im Fixierofen variiert. Die eine Hälfte der Gewirkstücke wurde in einer normalen Atmosphäre ohne Wasser- oder Dampfzusatz (trockene Atmosphäre) thermofixiert und die anderen Gewirkstücke wurden bei normaler Atmosphäre in der Gegenwart von Dampf thermofixiert.

**Tabelle 4:** Atmosphäre bei Thermofixierung

| Atmosphäre [-] | Anzahl der Waschungen nach WHOPES Protokoll [-] | Deltamethringehalt [%] |
|---|---|---|
| Dampf | 0 | 100% |
| trocken | 0 | 100% |
| Dampf | 5 | 82% |
| trocken | 5 | 90% |
| Dampf | 10 | 84% |
| trocken | 10 | 86% |
| Dampf | 15 | 79% |
| trocken | 15 | 81% |
| Dampf | 30 | 63% |
| trocken | 30 | 69% |

Die Ergebnisse zeigen, dass bei Einsatz einer trockenen Atmosphäre während der Thermofixierung der Verlust an Deltamethrin während der Waschungen nach WHOPES-Richtlinien geringer ausfällt.

**5. Beispiel: Einfluss des Polypropylentyps auf die biologische Wirksamkeit**

In diesem Beispiel wurde für die Herstellung der Fasern das Polypropylen Metocen® HM 562S und das Polypropylen Yuplen® H 893S eingesetzt, d.h. die Verdünnung des Masterbatches während der Verspinnung erfolgte jeweils mit einem dieser Polymere. Anschließend wurde aus den Fäden entsprechend dem oben beschriebenen Prozess ein Gewirk hergestellt.

Die Gewirkstücke wurden in einer trockenen Atmosphäre bei unterschiedlichen Temperaturen für 90 Sekunden thermofixiert. Die Gewirkstücke wurde vor der Thermofixierung entsprechend der oben beschriebenen Prozedur gewaschen, um die auf den Fasern vorhandene Spinnpräparation zu entfernen.

Nach der Thermofixierung wurden die Gewirkproben entsprechend den WHOPES-Richtlinienl 20 Waschungen unterzogen und wie oben beschrieben bezüglich ihrer biologischen Wirksamkeit getestet.

**Tabelle 5:** Einfluss der Polypropylensorte auf Biologie

| Temperatur bei der Thermofixierung [°C] | Knock down Yuplen® H 893S | Knock Down Metocen® HM562S | Mortalität Yuplen® H 893S | Mortalität Metocen® HM562S |
|---|---|---|---|---|
| 70 | 90% | 98% | 74% | 98% |
| 90 | 64% | 98% | 66% | 100% |
| 110 | 85% | 98% | 90% | 100% |
| 120 | 86% | 95% | 74% | 93% |
| 130 | 100% | 100% | 100% | 100% |
| 140 | 100% | 100% | 100% | 100% |

Die Ergebnisse zeigen, dass bei der Verwendung eines mit einem Metallocen-Katalysator hergestelltes Polypropylen eine höhere biologische Wirksamkeit erreicht wird als bei der Verwendung eines Polypropylens, dass unter Verwendung eines Ziegler-Natta Katalysators hergestellt wurde.

**6. Beispiel: Einfluss unterschiedlicher UV-Stabilisatoren auf die Isomerisierung von Deltamethrin**

Die Herstellung der erfindungsgemäßen Polymermaterialien erfolgte mit einem gleichsinnig drehenden, dichtkämmenden Doppelschneckenextruder mit einem Schneckendurchmesser von 34 mm und einer Gehäuselänge von 1200 mm. Die Extrudertemperatur betrug in allen Schritten 200°C und die Extruderdrehzahl betrug 160 U/min. Der Gesamtdurchsatz betrug 20 kg/h.

In einem ersten Schritt wurden Polymergranulate mit einer Konzentration von 2 Gew.-% Deltamethrin hergestellt. Dazu wurden 2 Gew.-% Deltamethrin technisch (BCS AG, Monheim DE) und 98 Gew.-% Polypropylen (Metocen® HM562S, LyondellBasell, Rotterdam, Niederlande) in dem Extruder gemischt. Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung.

Im zweiten Schritt wurden Polymergranulate mit 1 bzw. 5 Gew.-% UV-Stabilisator hergestellt. Dazu wurden 1 Gew.-% bzw. 5 Gew.-% des UV-Stabilisators und 99 bzw. 95 Gew.-% Polypropylen (Metocen® HM562S, LyondellBasell, Rotterdam, Niederlande) in dem Extruder gemischt. Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung.

Im dritten Schritt wurden die beiden zuvor hergestellten Granulate mit Deltamethrin bzw. UV-Stabilisator mit Polyproyplen so in dem Extruder gemischt, dass eine nominale Konzentration von 1 Gew.-% Deltamethrin und eine Konzentration des UV-Stabilisators von 0,2 Gew.-% erreicht wurde (TK1). Dazu wurden 50% des Granulats mit Deltamethrin, 20% bzw. 4% des Granulats mit UV-Stabilisator und 30% bzw. 46% Polypropylen in einem Taumelmischer vermischt und diese Mischung mit einem gleichsinnig drehenden, dichtkämmenden Doppelschneckenextruder unter den zuvor genannten Bedingungen extrudiert. Die Granulatmischung wurde der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung. Das Granulat enthielt ca. 0,9 % Deltamethrin.

Aus dem erfindungsgemäßen Polymermaterial wurden Folien mit einer Dicke von ca. 50 $\mu$m hergestellt. Dazu wurde das Polymermaterial zunächst bei 30°C für 4 bis 17 h getrocknet. Anschließend wurde es in einem Einwellenextruder aufgeschmolzen und durch eine Breitschlitzdüse extrudiert. Die Temperatur des Einwellenextruders wurde zwischen 220 und 250°C variiert. Die extrudierten Folien wurden mit einem Glättwerk abgezogen. Die Temperatur der ersten Walze des Glättwerks betrug ca. 85°C und die Temperatur der zweiten Walze des Glättwerks betrug ca. 60°C.

In den Versuchen wurden die folgenden UV-Stabilisatoren eingesetzt:

**Tabelle 6:** UV-Stabilisatoren

| Handelsname | Herstellerfirma | Substanzklasse |
|---|---|---|
| Chimasorb® 2020 | BASF (Ciba), Ludwigshafen, Deutschland | 1,6-Hexanediamine, N, N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4- (CAS 192268-64-7)piperidinamine |
| Tinuvin® 326 | BASF (Ciba), Ludwigshafen, Deutschland | Bumetrizol 2-(5-chloro-2H-benzotriazole-2-yl)-6-(1,1-dimethylethyl)-4-methyl-phenol (CAS 3896-11-5) |
| Tinuvin® 571 FF | BASF (Ciba), Ludwigshafen, Deutschland | Thazinverbindung Phenol, 2-(2H-benzotriazol-2-yl)-6-dodecyl-4-methyl-, branched and linear (CAS 125304-04-3) |
| Tinuvin® 783 FDL | BASF (Ciba), Ludwigshafen, Deutschland | Poly[[6-[(1,1,3,3-tetramethyl-butyl)amino]-1,3,5-triazin-2,4-diyl] [(2,2,6,6-Tetramethyl-4-piperidinyl)imino]-1,6-he-xanediyl[(2,2,6,6-tetramethyl-4-piperidinyl)imino]]), (CAS 71878-19-8), Butanedioic acid, dimethylester, polymer mit 4-hydroxy-2,2,6,6-tetramethyl-1-piperidin ethanol (CAS 65447-77-0) |

Die Folien wurden anschließend unter Verwendung der oben genannten Analysemethoden bezüglich ihres Deltamethringehaltes analysiert:

**Tabelle 7:** Gehalt an R-α-Isomer

| UV-Stabilisator | Extrusions-temperatur | Gehalt Deltamethrin (DLT) | Gehalt R-□-Isomer |
|---|---|---|---|
| | [°C] | [Gew.- %] | [% von DLT] |
| Chimasorb® 2020 | 220 | 0,859 | 9,989 |
| Chimasorb® 2020 | 240 | 0,883 | 12,503 |
| Chimasorb® 2020 | 250 | 0,888 | 14,496 |
| Tinuvin® 326 | 220 | 0,986 | 0,785 |
| Tinuvin® 326 | 240 | 0,979 | 0,000 |
| Tinuvin® 326 | 250 | 0,931 | 0,868 |
| Tinuvin® NOR 371 FF | 220 | 0,879 | 2,471 |
| Tinuvin® NOR 371 FF | 240 | 0,906 | 3,713 |
| Tinuvin® NOR 371 FF | 250 | 0,944 | 4,677 |
| Tinuvin® 783 FDL | 220 | 0,871 | 8,999 |
| Tinuvin® 783 FDL | 240 | 0,861 | 10,858 |
| Tinuvin® 783 FDL | 250 | 0,882 | 12,154 |

Die Ergebnisse zeigen, dass zur UV-Stabilisierung keine sterisch gehinderten Amine eingesetzt werden dürfen, um bei der weiteren Verarbeitung der erfindungsgemäßen Polymermaterialien eine Isomerisierung von mehr als 10% des Deltamethrins zu verhindern.

**7. Beispiel: Stand der Technik: Gecoatete PET-Netze**

Das insektizidbeladene Netz Permanet von der Firma Vestergaard Frandsen S.A., Schweiz wurde der biologischen Wirksamkeit und des Verlustes von Deltamethrin evaluiert. Anschließend erfolgte die mehrmalige Durchführung der Waschprozedur nach dem WHOPES Protokoll und weitere Evaluierungen der biologischen Wirksamkeit und des Verlustes von Deltamethrin.

Die Bestimmung des Deltamethringehaltes des Netzes erfolgte in gleicher Weise wie für das PP-Netz beschrieben.

**Tabelle 8:** Gehalt Deltmethrin und Retentionsindex

| Anzahl der Waschungen nach WHOPES Protokoll [-] | Knock down nach 60 min | Mortalität nach 24 h | Gehalt Deltamethrin (DLT) [Gew.-%] | Retentionsindex [-] |
|---|---|---|---|---|
| 0 | 100 | 100 | 0,208 | 0 |
| 5 | 100 | 100 | 0,086 | 84% |
| 10 | 98 | 100 | 0,066 | 89% |
| 15 | 97 | 84 | 0,059 | 92% |
| 20 | 84 | 72 | 0,050 | 93% |
| 25 | 69 | 64 | 0,040 | 94% |
| 30 | 70 | 61 | 0,042 | 95% |

Das insektizidbeladene Netz Permanet von der Firma Vestergaard Frandsen S.A., Schweiz wurde bezüglich der Wirkstoffstabilität nach einer Lagerung von 2 Wochen bei 54°C untersucht. Mit diesen Lagerbedingungen wird eine Mindesthaltbarkeit von 2 Jahren gewährleistet. Die Proben wurden 2 Wochen bei 54°C gelagert und anschließend entsprechend der oben beschriebenen Methode bezüglich ihres Gehaltes an R-$\alpha$-Isomer des Deltamethrins untersucht. Es wurde eine Doppelbestimmung durchgeführt.

**Tabelle 9:** Gehalt R-$\alpha$-Isomer

| R-$\alpha$-Isomer des DLT | |
|---|---|
| Vor Lagerung 2 Wochen 54°C | Nach Lagerung 2 Wochen 54°C |
| 3,35% | 47,44% |
| 3,51% | 35,35% |

Die Ergebnisse zeigen, dass dieses kommerziell erhältliche Netz die WHO-Anforderungen bezüglich Knock-Down und Mortalität nur für 15 Wäschen erfüllt und nach 5 Wäschen einen Retentionsindex von weniger als 95% aufweist. Ferner beträgt der Gehalt and R-$\alpha$-Isomer nach einer Lagerung von 2 Wochen bei 54°C deutlich mehr als 30%.

### 8. Beispiel: Stand der Technik: PE-Netze

Die insektizidbeladenen Netze Netprotect® (BESTNET EUROPE LTD., Großbritannien), Duranet® (Clarke Products, USA) von der Firma Vestergaard Frandsen S.A., Schweiz wurden der biologischen Wirksamkeit evaluiert. Anschließend erfolgte die mehrmalige Durchführung der Waschprozedur nach dem WHOPES Protokoll und weitere Evaluierungen der biologischen Wirksamkeit.

**Tabelle 10:** Biologische Wirksamkeit

| Anzahl der Waschungen nach WHOPES Protokoll [-] | Netprotect® | | Duranet® | |
|---|---|---|---|---|
| | Knock down nach 60 min [%] | Mortalität nach 24 h [%] | Knock down nach 60 min [%] | Mortalität nach 24 h [%] |
| 0 | 100 | 100 | 100 | 100 |
| 5 | 93 | 83 | 100 | 98 |

(fortgesetzt)

| Anzahl der Waschungen nach WHOPES Protokoll [-] | Netprotect® | | Duranet® | |
|---|---|---|---|---|
| | Knock down nach 60 min [%] | Mortalität nach 24 h [%] | Knock down nach 60 min [%] | Mortalität nach 24 h [%] |
| 10 | 66 | 44 | 100 | 98 |
| 15 | 19 | 57 | 95 | 95 |
| 20 | 7 | 14 | 64 | 70 |
| 25 | n.b. | n.b. | 64 | 70 |
| 30 | n.b. | n.b. | 51 | 51 |
| 35 | n.b. | n.b. | 41 | 41 |
| n.b. = nicht bestimmt. | | | | |

Die Ergebnisse zeigen deutlich, dass die getesteten handelsüblichen Netze basieren auf Polyethylene als Fasermaterial bereits nach deutlich weniger als 35 Waschungen die WHOPES-Richtlinien bezüglich der biologischen Wirksamkeit nicht mehr erfüllen.

**Patentansprüche**

1. Insektizidhaltiges Polymermaterial, enthaltend Deltamethrin sowie einen UV-Stabilisator, **dadurch gekennzeichnet, dass** das Material einen R-$\alpha$-Isomer Anteil des Deltamethrins von weniger als 10 Gew.-% aufweist.

2. Insektizidhaltiges Polymermaterial gemäß Anspruch 1, **dadurch gekennzeichnet, dass** das Material Polypropylen oder Polypropylencopolymer ist.

3. Insektizidhaltiges Polymermaterial gemäß Anspruch 2, **dadurch gekennzeichnet, dass** das Polypropylen mit Metallocenen als Katalysator hergestellt wurde.

4. Verfahren zur Herstellung des insektizidhaltigen Polymermaterials gemäß Anspruch 1, **dadurch gekennzeichnet, dass** zunächst das einzusetzende Polymer, Deltamethrin sowie ein UV-Stabilisator und gegebenenfalls weitere Insektizide oder Additive zusammen oder getrennt bei Temperaturen zwischen 120 und 250°C aufgeschmolzen werden und anschließend die Abkühlung und Erstarrung der polymeren Mischung erfolgt sowie deren Zerteilung in Granulate.

5. Verfahren gemäß Anspruch 4, **dadurch gekennzeichnet, dass** als UV-Stabilisatoren sterisch ungehinderte Verbindungen eingesetzt werden.

6. Granulate enthaltend das insektizidhaltige Polymermaterial gemäß Anspruch 1.

7. Verfahren zur Herstellung von Filamenten, Fasern, Fäden und Garnen, **dadurch gekennzeichnet, dass** das insektizidhaltige Polymermaterial gemäß Anspruch 1 zunächst aufgeschmolzen, zu Spinnfäden geformt und abgekühlt wird, die entstandenen Spinnfäden über eine Streckanlage geführt und verstreckt werden und abschließend die Fixierung und/oder Relaxierung der Filamente, Fasern, Fäden und Garne erfolgt.

8. Verfahren gemäß Anspruch 7, **dadurch gekennzeichnet, dass** bei der Verspinnung ein Spin finish eingesetzt wird.

9. Verwendung der insektizidhaltigen Polymermaterialien gemäß Anspruch 1 zur Herstellung von Folien, Luftpolsterfolien, Filme, Profile, Blätter, Drähte, Fäden, Bänder, Kabel- und Rohrverkleidungen und Gehäuse für elektrische Geräte.

10. Verwendung der insektizidhaltigen Polymermaterialien gemäß Anspruch 1 zur Herstellung von textilen Flächengebilden wie Gewebe, Geflechte, Maschenware, Filze oder Vliesstoffe.

11. Verwendung der insektizidhaltigen Polymermaterialien gemäß Anspruch 1 zur Herstellung von Bettnetzen.

12. Fäden, Garne, Fasern oder Filamente enthaltend die insektizidhaltigen Polymermaterialien gemäß Anspruch 1.

13. Netzartigen Flächengebilde enthaltend das insektizidhaltigen Polymermaterial gemäß Anspruch 1.

**EP 2 377 399 A1**

Europäisches
Patentamt
European
Patent Office
Office européen
des brevets

# EUROPÄISCHER RECHERCHENBERICHT

Nummer der Anmeldung

EP 10 15 9994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | "The e-Pepticide Manual, Deltamethrin (223) ED - TOMLIN C D S (EDITOR)" 1. Januar 2003 (2003-01-01), THE E-PESTICIDE MANUAL, BRITISH CROP PROTECTION COUNCIL , XP002485043 ISBN: 978-1-901396-34-8 * das ganze Dokument * ----- | 1-13 | INV. A01N53/00 A01N25/10 A01N25/22 |
| Y | WO 2009/003468 A1 (VESTERGAARD FRANDSEN SA [CH]; VESTERGAARD FRANDSEN MIKKEL [CH]) 8. Januar 2009 (2009-01-08) * Ansprüche * * Seite 8, Absatz 3 * * Seite 9, Absatz 2 * ----- | 1-13 | |
| Y | US 4 668 666 A (ALLAN G GRAHAM [US] ET AL) 26. Mai 1987 (1987-05-26) * Beispiel 5 * ----- | 1-13 | |
| | | | **RECHERCHIERTE SACHGEBIETE (IPC)** A01N |

Der vorliegende Recherchenbericht wurde für alle Patentansprüche erstellt

| Recherchenort | Abschlußdatum der Recherche | Prüfer |
|---|---|---|
| München | 10. September 2010 | Bertrand, Franck |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 15 9994

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-09-2010

| Im Recherchenbericht angeführtes Patentdokument | Datum der Veröffentlichung | Mitglied(er) der Patentfamilie | Datum der Veröffentlichung |
|---|---|---|---|
| WO 2009003468 A1 | 08-01-2009 | CN 101720185 A<br>EP 2170048 A1<br>US 2010136076 A1 | 02-06-2010<br>07-04-2010<br>03-06-2010 |
| US 4668666 A | 26-05-1987 | GB 2181648 A<br>JP 62500935 T<br>WO 8603374 A1 | 29-04-1987<br>16-04-1987<br>19-06-1986 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008004711 A2
- WO 2008032844 A
- WO 9729634 A
- WO 9901030 A
- WO 05044001 A
- DE 4136694 A
- DE 102005054653 A

**In der Beschreibung aufgeführte Nicht-Patentliteratur**

- *Guidelines for laboratory and field testing of long-lasting insecticidal mosquito nets,* 2005, http://www.who.int/whopes/guidelines/en
- Report of the Eleventh WHOPES Working Group Meeting. WHO, 10. Dezember 2007
- **KAISER.** *Kunststoffchemie für Ingenieure,* 246-254